# EUROPÄISCHE PATENTANMELDUNG

(11) **EP 3 229 084 A1**
(43) Veröffentlichungstag der Anmeldung: **11.10.2017**
(21) Anmeldenummer: 16163801.0
(22) Anmeldetag: 05.04.2016
(51) Int. Cl.: G05B 19/04, G06Q 50/06, G06Q 10/06

(54) **VERFAHREN UND ANORDNUNG ZUR ERMITTLUNG VON ANGABEN FÜR DEN KONSUM EINER RESSOURCE VON EINER MEHRZAHL KONSUMENTEN IN EINEM SYSTEM**

(71) Anmelder: Siemens Aktiengesellschaft, 80333 München (DE)
(72) Erfinder: Bölderl-Ermel, Wolfgang, 90530 Wendelstein (DE); Kepka, Alexander, 90427 Nürnberg (DE); Peschke, Jörn, 90489 Nürnberg (DE); Schiller, Christian, 90518 Altdorf (DE); Volkmann, Patrick, 90480 Nürnberg (DE)

(57) **Zusammenfassung**

Die Erfindung betrifft ein Verfahren und Anordnung zur Ermittlung von Angaben (x, y, z) für den Konsum (KS1, KS2, KSn) einer Ressource (R) von einer Mehrzahl Konsumenten (K1, K2, Kn) in einem System (S), wobei für jeden der Konsumenten (K1, K2, Kn) zwischen zumindest zwei Schaltzuständen unterschieden wird. Dabei wird an zumindest einem Zugangspunkt der Ressource (R) zu dem System (S) zu einer Mehrzahl Zeitpunkte und/oder für eine Anzahl verschiedener Schaltzustände der Konsumenten (K1, K2, Kn) jeweils ein Wert (Ir) für einen Gesamtkonsum des Systems (S) an der Ressource (R) erfasst, wobei zu jedem erfassten Wert die zum Zeitpunkt der Erfassung bestehenden Schaltzustände ermittelt werden, und wobei aus den Werten (Ir) und den jeweils zugeordneten Schaltzuständen Angaben für den Konsum einzelner Konsumenten (K1, K2, Kn) oder von Gruppen der Konsumenten (K1, K2, Kn) ermittelt werden. Damit ist es möglich, fein-granular Messdaten für den Bezug der Ressource (R) durch einzelne Konsumenten (K1, K2, Kn) zu erlangen, wobei eine einzige Messeinrichtung oder nur wenige Messeinrichtungen ausreichen.

## Beschreibung

Die Erfindung betrifft ein Verfahren zur Ermittlung von Angaben für den Konsum einer Ressource von einer Mehrzahl Konsumenten in einem System gemäß dem Oberbegriff des Patentanspruchs 1, und eine Anordnung zur Durchführung des Verfahrens gemäß dem Oberbegriff des Patentanspruchs 10.

In komplexen technischen Systemen, insbesondere in industriellen Automatisierungsanordnungen, sind in der Regel eine Vielzahl von Konsumenten bzw. Verbrauchern von einer Ressource, zumeist Energie, angeordnet. Da der Konsum einer Ressource, insbesondere von Energie in Form von elektrischer Energie oder in Form eines fossilen Brennstoffs, zum einen Kosten verursacht, und zum anderen die Umwelt belastet, ist es ein beständiges Bestreben bei dem Betrieb solcher Systeme, den Betrieb zu optimieren, so dass dieser möglichst wirtschaftlich erfolgt und somit insgesamt die wenigsten Ressourcen an Energie, Emissionen, Arbeit, Zeit etc. aufgewendet werden.

Dies gilt, wie gesagt, insbesondere für industrielle Automatisierungsanordnungen, beispielsweise auf dem Gebiet der Automatisierung einer Produktion oder der Steuerung eines chemischen oder biologischen Prozesses, wobei bekannt ist, mittels sogenannter Energiemanagement-Systeme den Gebrauch von Ressourcen (insbesondere elektrische Energie) bei einzelnen Produktionsschritten, einzelnen Geräten, einzelnen Prozessschritten zu beobachten und, wo immer möglich, durch ein möglichst geschicktes Steuern des Systems eine Optimierung herbeizuführen.

Für eine solche Optimierung, aber auch für die Ermittlung stückbezogener Aufwendungen bzgl. der Ressource, insbesondere an Energie, ist es wünschenswert, möglichst fein-granular, also bezogen auf den einzelnen Konsumenten (Verbraucher), den jeweiligen Konsum zum jeweiligen Zeitpunkt oder für den jeweiligen Betriebszustand, Produktionsschritt, Prozessschritt oder dgl. möglichst genau zu kennen und somit zu ermitteln.

Das Problem kann dadurch gelöst werden, dass für jeden der Konsumenten ein eigenes Ressourcen-Erfassungsmittel, beispielsweise ein Energieerfassungsgerät oder dergleichen, vorgeschaltet wird und die damit erzeugten Messwerte permanent zu speichern und zu verarbeiten. Dies ist eine genaue Methode, die jedoch einen hohen Aufwand an Erfassungsmitteln (Messeinrichtungen, Zähleinrichtungen etc.) verlangt. Hinzukommt, dass in vielen Fällen einzelne Verbraucher (Konsumenten) überhaupt nicht oder nur unter hohem Aufwand separat messtechnisch erfasst werden können.

Eine oft praktizierte Alternative besteht darin, für jeden Konsumenten eine Nenn-Aufnahme der konsumierten Ressource zu ermitteln und mit der jeweiligen Einschaltdauer oder Betriebsdauer zu multiplizieren, wobei die Einschaltdauer oder Betriebsdauer auch aus einer industriellen Steuerung (Programmable Logic Controller - PLC) oder einer ähnlichen zentralen Einrichtung abgerufen werden kann. Vielfach liegen die Nenn-Konsumdaten für Verbraucher bzw. Konsumenten, insbesondere für elektrische Verbraucher, sogar schon herstellerseitig vor. Dieses Vorgehen hat jedoch den Nachteil, dass die Nenn-Konsumangaben, beispielsweise die Nennleistung einer elektrischen Pumpe, je nach Betriebszustand nicht dem tatsächlichen Konsum entspricht; am Beispiel einer Pumpe hängt die Aufnahme an elektrischer Energie bzw. elektrischer Leistung immer vom derzeitigen Fördervolumen, Förderdruck, der Konsistenz oder Zustand des Mediums und anderen Faktoren ab.

Kurz gesagt, ist es eine Anforderung der Betreiber von technischen Systemen, aus gesetzlichen, ökonomischen oder Marketing-relevanten Gründen Transparenz über den Verbrauch einer Ressource, insbesondere über den Energie- und Rohstoffverbrauch, zu erlangen. Je fein-granularer die Werte vorliegen, desto besser uns desto höher sind die Potentiale bei der Optimierung eines Systems. Dem Wunsch nach fein-granularer Transparenz stehen jedoch die damit verbundenen Anschaffungs- und Betriebskosten der entsprechenden Messtechnisch gegenüber.

Es ist daher eine Aufgabe der vorliegenden Erfindung, ein Verfahren und eine Anordnung zur Ermittlung von möglichst präzisen und fein-granularen Angaben für den Konsum einer Ressource in einem System mit einer Mehrzahl Konsumenten dieser Ressource vorzuschlagen.

Es ist eine Kernidee der erfindungsgemäßen Lösung dieser Aufgabe, mit Hilfe einer zentralen Messeinrichtung (z. B. ein zentraler Stromzähler oder dergleichen) und den ohnehin vorliegenden Automatisierungsdaten (z. B. von einer Produktionsanlage) zu beobachten, bei welchen Schaltzuständen der einzelnen Konsumenten welche Messwerte für die zentral erfasste Ressource auftreten. Durch eine längere Beobachtung bzw. durch eine Beobachtung einer Vielzahl unterschiedlicher Schaltzustände des Gesamtsystems kann dann eine genauere Zuordnung des Konsums einer Ressource auf den einzelnen Konsumenten bzw. auf Gruppen von Konsumenten erfolgen, wobei das Resultat dieser Zuordnung bzw. die Genauigkeit der Ermittlung der Angaben für den Konsum ansteigt, je mehr Messergebnisse für unterschiedliche Betriebszustände bzw. Schaltzustände der Konsumenten verarbeitet werden können. Durch ein solches Verfahren bzw. durch eine solche Vorrichtung bestehen wesentlich geringere Kosten für die Erreichung der geforderten Transparenz, wobei das Verfahren zudem "nicht-invasiv" in bestehende Anlagen bzw. Systeme integriert werden kann und wobei im Extremfall auf das einzelne beeinflussbare Stellglied, Schaltelement bzw. auf die einzelne schaltbare Konsumeinheit die Verwendung der Ressource heruntergebrochen werden kann.

Die Aufgabe wird insbesondere durch ein Verfahren gemäß dem Patentanspruch 1 und durch eine Anordnung gemäß dem Patentanspruch 10 gelöst.

Dabei ist ein Verfahren zur Ermittlung von Angaben für den Konsum einer Ressource von einer Mehrzahl Konsumenten in einem System vorgesehen, wobei für jeden der Konsumenten zwischen zumindest zwei Schaltzuständen unterschieden wird. Dabei wird zumindest an zumindest einem Zugangspunkt der Ressource zu dem System zu einer Mehrzahl Zeitpunkte und/oder für eine Anzahl verschiedener Schaltzustände der Konsumenten jeweils ein Wert für einen Gesamtkonsum des Systems an der Ressource erfasst wird, wobei zu jedem erfassten Wert die zum Zeitpunkt der Erfassung bestehenden Schaltzustände ermittelt werden, und wobei aus den Werten und den jeweils zugeordneten Schaltzuständen Angaben für den Konsum einzelner Konsumenten oder von Gruppen der Konsumenten für den Bezug der Ressource ermittelt werden. Damit ist es möglich, fein-granular Messdaten für den Bezug der Ressource durch einzelne Konsumenten zu erlangen, wobei eine einzige Messeinrichtung oder nur wenige Messeinrichtungen ausreichen.

Die Erfindung wird außerdem durch eine Anordnung zur Ermittlung von Angaben für den Konsum an einer Ressource zu einer Mehrzahl Konsumenten in einem System gelöst, wobei die Anordnung zumindest ein Erfassungsmittel für die Erfassung des Gesamtkonsums des Systems an zumindest einem Zugangspunkt des Systems aufweist. Dabei ist die Anordnung zur Erfassung von Schaltzuständen für einzelne Konsumenten oder Konsumentengruppen des Systems vorgesehen, wobei ein Auswertemittel zur Ermittlung von Angaben für den Konsum einzelner Konsumenten oder von Gruppen der Konsumenten mittels des vorstehend beschriebenen Verfahrens vorgesehen ist. Mit einer solchen Anordnung lassen sich die bereits in Bezug auf das Verfahren geschilderten Vorteile realisieren.

Vorteilhafte Ausgestaltungen des erfindungsgemäßen Verfahrens sind in den abhängigen Patentansprüchen angegeben. Die dabei beschriebenen Merkmale und deren Vorteile gelten sinngemäß auch für die erfindungsgemäße Anordnung.

Ein besonders hoher Optimierungsbedarf besteht in industriellen Automatisierungsanordnungen bzw. industriellen Prozesssteuerungen. Daher ist es von Vorteil, wenn einzelne Konsumenten Geräte oder Anlagenteile der industriellen Automatisierungsanordnung bzw. der industriellen Prozessanlage verwendet werden. Dabei ist ein besonders häufiger Anwendungsfall die Erfassung der Ressource "Energie", insbesondere elektrischer Energie oder eines fossilen Brennstoffs. Vorteilhaft können jedoch auch andere Ressourcen betrachtet werden, wobei eine Ressource im Sinne der Erfindung auch eine Emission von Umweltbelastungen sein kann, beispielsweise im Sinne von Abgas, Abwasser, Lärm oder dergleichen.

Eine separate Erfassung von Schaltzuständen der einzelnen Konsumenten kann eingespart werden, wenn Informationen über die Schaltzustände aus zumindest einer industriellen Steuerung des Systems, insbesondere einer programmgesteuerten Automatisierungskomponente (PLC - Programmable Logic Controller), einem Prozessleitsystem oder einem industriellen Bedien- und Beobachtungsgerät, abgerufen werden.

Häufig werden die Schaltzustände einzelner Komponenten oder Konsumenten ohnehin in einem Archiv gespeichert, beispielsweise in sogenannten "log-Dateien" oder "Historians". In der Regel sind diese Daten ohnehin mit einem Zeitstempel versehen, so dass zur Erlangung der für das erfindungsgemäße Verfahren notwendigen Daten es ausreicht, auch die Werte für den Konsum des Gesamtsystems zu protokollieren und dabei die einzelnen Werte ebenfalls mit einem Zeitstempel zu versehen. Damit ergibt sich in Summe eine Datenbasis, bei der den einzelnen Schaltzustand-Kombinationen vieler oder aller Konsumenten der jeweils resultierende Gesamtverbrauch der Ressource zugeordnet ist, woraus sich insbesondere aus der jeweiligen Änderung des Gesamtkonsums bei der Änderung einzelner Schaltzustände fein-granular der Konsum der einzelnen Konsumenten ergibt. Dabei können vorteilhaft auch weitere Zustandsinformationen verarbeitet werden, beispielsweise die jeweilige Prozesstemperatur eines chemischen Prozesses, so dass die Werte für den Konsum auch differenziert für verschiedene Prozesszustände oder, wie im Beispiel erwähnt, Temperaturen ermittelt werden können.

In der Praxis können häufig nicht Gesamt-Messwerte für alle kombinatorisch möglichen Schaltzustände ermittelt werden. Überdies ist die Messgenauigkeit eines zentralen Erfassungsmittels oft beschränkt, weil dieses auf den Gesamt-Konsum ausgelegt sein muss und daher bei Schaltzustands-Änderungen einer einzelnen Systemkomponente bzw. eines einzelnen Konsumenten oft nur beschränkt reagiert. Daher ist es sinnvoll und vorteilhaft, wenn bei den Angaben für den Konsum der einzelnen Konsumenten bzw. Gruppen von Konsumenten Bandbreiten oder Verbrauchsklassen angegeben werden, wobei möglichst ein Fehlerwert oder ein Toleranzwert in Abhängigkeit von der Messgenauigkeit bei der Erfassung des Gesamtkonsums abgeschätzt und ausgegeben wird. Unter Änderungen von Schaltzuständen sollen auch Änderungen von Regelvorgaben (z.B. Sollzustände) oder Änderungen von jeglichen Betriebszuständen (Sollwerte oder Istwerte) der jeweils betrachteten Komponente verstanden werden; ein Schaltzustand ist dem zu Folge nicht zwangsläufig ein binärer Zustand (z.B. Ein / Aus, kalt /warm, leer / voll), sondern kann auch eine fließende Größe und auch eine Kombination verschiedener Zustandsinformationen oder Betriebsparameter sein.

Sofern im Regelbetrieb eines Systems nicht genügend unterschiedliche Kombinationen der Schaltzustände auftreten bzw. einzelne Konsumenten selten oder nie separat geschaltet werden, kann es von Vorteil sein, in einer Anzahl von Kalibrierungsschritten die Schaltzustände einzelner oder weniger Konsumenten oder Konsumentengruppen zu variieren, wobei analog zum Produktivbetrieb jeweils Änderungen des Messwerts für den Gesamtkonsum erfasst und dabei Rückschlüsse auf das Konsumverhalten einzelner Konsumenten gezogen werden können. Insbesondere ist es dabei auch möglich, den bereits geschilderten Fehlerwert oder die geschilderte Toleranz festzulegen oder sogar einen Korrekturwert abzuschätzen. Eine Kalibrierung des zentralen Messmittels bzw. der zentralen Messeinrichtung kann überdies erfolgen, wenn bei einem solchen Kalibrierungszyklus zumindest ein Konsument mit einem bekannten Konsumverhalten geschaltet wird, wobei die Reaktion des Wertes des Gesamtkonsums dabei beobachtet wird, so dass somit eine exakte Kalibrierung bzw. eine Ermittlung eines Korrekturwertes oder Korrekturfaktors erfolgen kann.

Ein Ausführungsbeispiel des erfindungsgemäßen Verfahrens wird nachfolgend anhand der Zeichnungen erläutert. Das Ausführungsbeispiel dient gleichzeitig der Erläuterung einer erfindungsgemäßen Anordnung.

Dabei zeigen:
- FIG 1: in schematischer Darstellung den Ressourcen- und Informationsfluss in einer erfindungsgemäßen Anordnung,
- FIG 2: das Ersatzschaltbild eines einfachen Stromkreises,
- FIG 3: eine Tabelle mit Messungen des Gesamtkonsums einer Ressource am Beispiel der Schaltung aus der FIG 2 bei der Berücksichtigung verschiedener Schaltzustände, und
- FIG 4: eine Konsumliste mit dem anhand der Tabelle aus der FIG 3 ermittelten Konsum einzelner Konsumenten in der Schaltung gemäß der FIG 2.

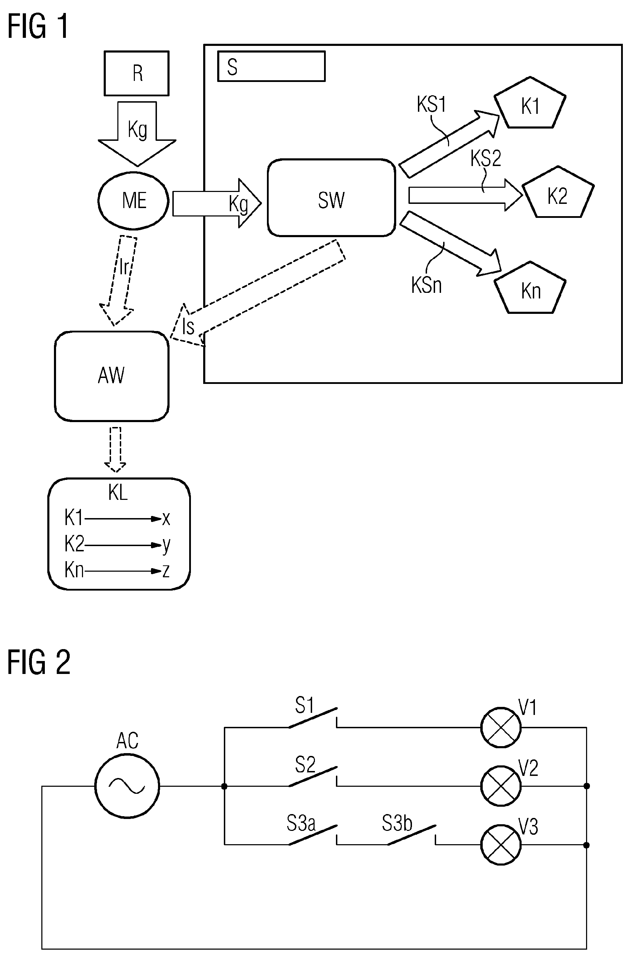

In der FIG 1 ist schematisch ein System S dargestellt, welches einen Gesamtkonsum Kg einer Ressource R aufweist, die vor der Zuführung in das System S eine Messeinrichtung ME durchläuft. Das System S weist dabei Konsumenten K1, K2, Kn (beispielsweise Verbraucher) auf, die jeweils einen Anteil des Gesamtkonsums Kg konsumieren, nämlich den Konsum KS1, KS2, KSn für die einzelnen Konsumenten K1, K2, Kn.

In der FIG 1 ist weiterhin ein Auswertemittel AW dargestellt, was beispielsweise ein separater Computer oder aber ein Computerprogramm auf einem bestehenden Computer, einer bestehenden Automatisierungskomponente oder einem anderen datentechnischen Gerät sein kann. Das Auswertemittel AW bezieht von der Messeinrichtung ME erste Informationen Ir über den Gesamtkonsum Kg und zweite Informationen Is über den einen jeweiligen Schaltzustand der Konsumenten K1, K2, Kn, wobei die Schaltzustände der Konsumenten K1, K2, Kn durch eine Steuerungseinrichtung SW ("switch") des Systems S situationsabhängig festgelegt werden und wobei die zweiten Informationen Is von der Schalteinrichtung SW an das Auswertemittel AW gemeldet werden, beispielsweise über eine Datenverbindung oder einen Datenkanal. Das Auswertemittel AW berechnet aus den ersten und den zweiten Informationen Ir, Is die Angaben x, y, z für den Konsum der Ressource R für die einzelnen Konsumenten K1, K2, Kn. Diese Angaben können in einer Konsumliste KL angezeigt und/oder gespeichert werden. Dabei ist es sowohl möglich, den momentanten Konsum der einzelnen Ressourcen K1, K2, Kn anzuzeigen, als auch den einzelnen Konsum im Sinne einer "Nennkonsumangabe" für den Fall der Aktivierung der einzelnen Konsumenten K1, K2, Kn anzugeben, oder beides.

Während in der FIG 1 ein Fall dargestellt ist, in dem aus einer Automatisierungseinrichtung oder einer anderen Schalteinrichtung SW die Daten über den jeweiligen Schaltzustand der Konsumenten K1, K2, Kn abgerufen bzw. von dieser an das Auswertemittel AW übertragen werden, ist es in einer alternativen, nicht dargestellten Variante möglich, separate Sensoren für das Erfassen des Schaltzustandes der einzelnen Konsumenten K1, K2, Kn vorzusehen. Selbstverständlich sind auch Mischformen denkbar.

In der FIG 2 ist schematisch ein einfacher Stromkreis mit vier Schaltern S1, S2, S3a, S3b und mit drei Konsumenten V1, V2, V3 ("Verbrauchern") und einer Stromquelle AC vorgesehen, wobei (nicht dargestellt) in der Stromquelle AC auch ein Erfassungsmittel (Strommesseinrichtung) vorgesehen ist. Die gezeigten Schalter S1, S2, S3a, S3b und die Konsumenten V1, V2, V3 sollen als das System S aus der FIG 1 betrachtet werden.

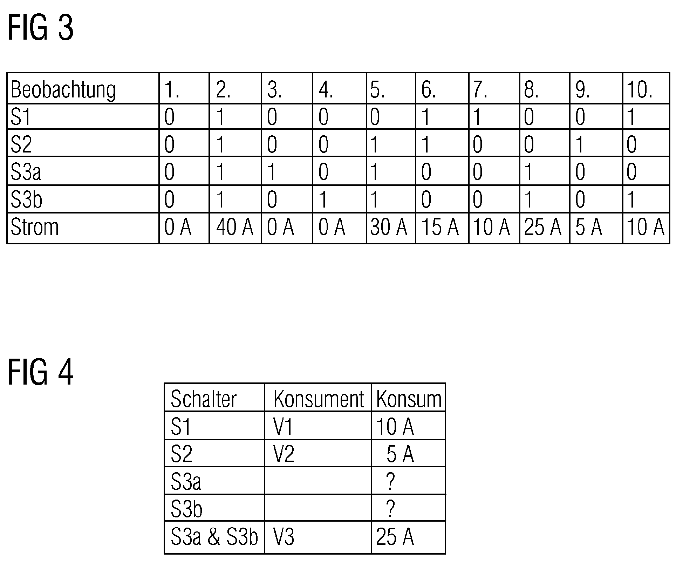

Im Folgenden soll davon ausgegangen werden, dass bei zehn verschiedenen Gesamt-Schaltzuständen ("Konstellationen"), also zu zehn verschiedenen Zeitpunkten, die jeweiligen Schaltzustände und der dabei in der Stromquelle AC gemessene Gesamtstrom protokolliert werden, was in der FIG 3 tabellarisch dargestellt ist. Aus den hier protokollierten Messzyklen wird dann von einem Auswertemittel AW der jeweilige Konsum der einzelnen Konsumenten V1, V2, V3 für den Fall errechnet und dargestellt, dass der Schaltzustand des jeweiligen Konsumenten V1, V2, V3 "eingeschaltet" ist, also der jeweils zugeordnete Schalter S1, S2, S3a, S3b den Schaltzustand "1" aufweist.

Die FIG 4 zeigt das Resultat für den Konsum der einzelnen Konsumenten V1, V2, V3 in der Anordnung gemäß der FIG 2. Die FIG 4 zeigt beispielsweise für den Konsumenten V2 einen Konsum von 5 A. Dies kann beispielsweise aus dem Zustandswechsel zwischen der sechsten und der siebten Beobachtung (Messung) der FIG 3 geschlossen werden, wobei mit Abschalten des Schalters S2 und damit des Verbrauchers bzw. Konsumenten V2 der Gesamtstrom von 15 A auf 10 A sinkt, wodurch klar ist, dass der Konsument V2 5 A konsumiert. Entsprechend lassen sich auch der Konsum der anderen Verbraucher bzw. Konsumenten V1, V3 bestimmen. Sobald die in der FIG 4 in der rechten Spalte aufgezeigten Werte für den Konsum der einzelnen Konsumenten V1, V2, V3 feststehen, kann durch das Auswertemittel AW auch für nicht dargestellte Schaltzustand-Kombinationen eine Prognose für den Gesamtkonsum (in der FIG 3 die Zeile "Strom") ausgegeben werden. Selbstverständlich können die dargestellten Werte auf verschiedene weitere Zustandsinformationen bezogen sein, beispielsweise auf eine jeweilige Spannung der Energieversorgung (Stromquelle AC) im Falle eines nicht linearen Verbrauchsverhaltens oder dergleichen. Ebenso können gegenseitige Abhängigkeiten einkalkuliert werden, beispielsweise für den Fall, in dem bei vielen eingeschalteten Konsumenten eine Überlastung einer Energieversorgung eintritt und daher der Gesamtkonsum eben nicht mehr der Summe der einzelnen Nenn-Konsumangaben entspricht.

In der geschilderten Anordnung und unter Verwendung des geschilderten Verfahrens entstehen wesentlich geringere Kosten für die Erreichung von Transparenz in Bezug auf die Ermittlung von Angaben für den Konsum an einer Ressource in einem System mit einer Mehrzahl Konsumenten. Das Verfahren kann regelmäßig "non-invasiv" in bestehende Anlagen integriert werden, da bei den modernen Automatisierungseinrichtungen und anderen Systemn alle benötigten Daten in der Regel bereits vorhanden sind. Dabei ist die erreichbare Granularität maximal, d. h. auf kleinstmögliche Einheiten oder Sub-Systeme bezogen. Es kann also ein Gesamtkonsum ohne zusätzliche Messeinrichtungen auf ein einzelnes beeinflussbares Stellglied (z.B. Schalter) heruntergebrochen werden. Das Verfahren kann außerdem dafür benutzt werden, um Unregelmäßigkeiten bzw. Störungen zu detektieren, wenn nämlich ein beobachteter Gesamtkonsum nicht mit einem anhand der beobachteten Schaltzustände bzw. einer jeweils vorliegenden Schaltzustands-Kombination und der daraus resultierenden theoretischen Summe der Einzel-Konsumangaben übereinstimmt. Vorteilhaft können die mit dem erfindungsgemäßen Verfahren gewonnenen Informationen an ein Energiemanagement-System weitergereicht werden, womit weitere Optimierungen in einem Fertigungsprozess und dergleichen durchgeführt werden können.

## Patentansprüche

1. Verfahren zur Ermittlung von Angaben (x, y, z) für den Konsum (KS1, KS2, KSn) einer Ressource (R) von einer Mehrzahl Konsumenten (K1, K2, Kn) in einem System (S), wobei für jeden der Konsumenten (K1, K2, Kn) zwischen zumindest zwei Schaltzuständen unterschieden wird,
**dadurch gekennzeichnet,**
**dass** an zumindest einem Zugangspunkt der Ressource (R) zu dem System (S) zu einer Mehrzahl Zeitpunkte und/oder für eine Anzahl verschiedener Schaltzustände der Konsumenten (K1, K2, Kn) jeweils ein Wert für einen Gesamtkonsum (Kg) des Systems (S) an der Ressource (R) erfasst wird,
wobei zu jedem erfassten Wert die zum Zeitpunkt der Erfassung bestehenden Schaltzustände ermittelt werden, und dass aus den Werten und den jeweils zugeordneten Schaltzuständen Angaben (x, y, z) für den Konsum (KS1, KS2, KSn) einzelner Konsumenten (K1, K2, Kn) oder von Gruppen der Konsumenten (K1, K2, Kn) ermittelt werden.

2. Verfahren nach Patentanspruch 1,
**dadurch gekennzeichnet,**
**dass** das System (S) eine industrielle Automatisierungsanordnung ist und als die Konsumenten (K1, K2, Kn) Geräte oder Anlagenteile der industriellen Automatisierungsanordnung verwendet werden.

3. Verfahren nach Patentanspruch 2,
**dadurch gekennzeichnet,**
**dass** für die Ermittlung der Angaben (x, y, z) für den Konsum (KS1, KS2, KSn) einzelner Konsumenten (K1, K2, Kn) die Änderungen der Schaltzustände dieser Konsumenten (K1, K2, Kn) mit den dabei erfassten Änderungen des Gesamtkonsums (Kg) in Bezug gesetzt werden.

4. Verfahren nach einem der vorhergehenden Patentansprüche,
**dadurch gekennzeichnet,**
**dass** als die Ressource (R) Energie,
insbesondere elektrische Energie oder ein fossiler Brennstoff,
erfasst wird.

5. Verfahren nach einem der vorhergehenden Patentansprüche,
**dadurch gekennzeichnet,**
**dass** Informationen (Is) über die Schaltzustände aus zumindest einer industriellen Steuerung (SW), insbesondere einer programmgesteuerten Automatisierungskomponente, einem Prozessleitsystem oder einem industriellen Bedien- und Beobachtungsgerät,
abgerufen werden.

6. Verfahren nach Patentanspruch 5,
**dadurch gekennzeichnet,**
**dass** zur Ermittlung der Schaltzustände ein Zugriff auf eine Protokolleinrichtung oder eine Protokolldatei erfolgt,
wobei in der Protokolleinrichtung oder der Protokolldatei Informationen (Is) über Änderungen der Schaltzustände mit dem jeweiligen Änderungszeitpunkt protokolliert werden.

7. Verfahren nach einem der vorhergehenden Patentansprüche,
**dadurch gekennzeichnet,**
**dass** für die Angaben (x, y, z) für den Konsum (KS1, KS2, KSn) der Konsumenten (K1, K2, Kn) bzw. der Gruppen von Konsumenten (K1, K2, Kn) Bandbreiten oder Verbrauchsklassen angegeben werden,
wobei ein Fehlerwert oder Toleranzwert oder Korrekturwert in Abhängigkeit von der Messgenauigkeit bei der Erfassung des Gesamtkonsums abgeschätzt und ausgegeben wird.

8. Verfahren nach Patentanspruch 7,
**dadurch gekennzeichnet,**
**dass** in einer Anzahl Kalibrierungszyklen die Schaltzustände einzelner oder weniger Konsumenten (K1, K2, Kn) oder Konsumentengruppen geändert werden,
wobei jeweils Änderungen des Messwerts für den Gesamtkonsums (Kg) erfasst und anhand dessen der Fehlerwert oder der Toleranzwert oder der Korrekturwert abgeschätzt wird.

9. Verfahren nach einem der vorhergehenden Patentansprüche,
**dadurch gekennzeichnet,**
**dass** zusammen mit den einzelnen Messwerten für den Gesamtkonsum (Kg) und/oder den einzelnen ermittelten Angaben (x, y, z) für den Konsum (KS1, KS2, KSn) einzelner Konsumenten (K1, K2, Kn) oder von Gruppen der Konsumenten (K1, K2, Kn) auch Zustandsinformationen des Systems (S) oder von einzelnen Konsumenten (K1, K2, Kn) oder Konsumentengruppen erfasst werden,
wobei für verschiedene Zustände des Systems (S) bzw. einzelner Komponenten bzw. Konsumentengruppen verschiedene Angaben (x, y, z) für den Konsum (KS1, KS2, KSn) einzelner Konsumenten (K1, K2, Kn) oder Konsumentengruppen ermittelt werden.

10. Anordnung zur Ermittlung von Angaben (x, y, z) für den Konsum (KS1, KS2, KSn) an einer Ressource (R) zu einer Mehrzahl Konsumenten (K1, K2, Kn) in einem System (S), wobei die Anordnung zumindest ein Erfassungsmittel (ME) für die Erfassung des Gesamtkonsums (Kg) des Systems (S) an zumindest einem Zugangspunkt des Systems (S) aufweist,
**dadurch gekennzeichnet,**
**dass** die Anordnung zur Erfassung von Schaltzuständen für einzelne Konsumenten (K1, K2, Kn) oder Konsumentengruppen des Systems (S) vorgesehen ist, und
**dass** ein Auswertemittel (AW) zur Ermittlung von Angaben (x, y, z) für den Konsum (KS1, KS2, KSn) einzelner Konsumenten (K1, K2, Kn) oder von Gruppen der Konsumenten (K1, K2, Kn) mittels des Verfahrens gemäß dem Patentanspruch 1 vorgesehen ist.
